# EUROPEAN PATENT APPLICATION

(11) **EP 4 714 616 A1**
(43) Date of publication of application: **25.03.2026**
(21) Application number: 24813863.8
(22) Date of filing: 28.03.2024
(51) Int. Cl.: B25J 9/16

(54) **ROBOT MOTION CONTROL METHOD AND APPARATUS, ROBOT, AND STORAGE MEDIUM**

(30) Priority: 31.05.2023 CN 202310638909
(71) Applicant: Shenzhen Pudu Technology Co., Ltd., Shenzhen, Guangdong 518000 (CN)
(72) Inventor: CHEN, Junwei, Shenzhen, Guangdong 518000 (CN); HUANG, Yin, Shenzhen, Guangdong 518000 (CN); ZHOU, Xiaofan, Shenzhen, Guangdong 518000 (CN)
(74) Representative: Appleyard Lees IP LLP
(86) International application number: PCT/CN2024/084443
(87) International publication number: WO 2024/244657

(57) **Abstract**

Disclosed are a robot motion control method and an apparatus, a robot, and a storage medium. The robot is equipped with a lidar. A marker is provided in an operating environment of the robot. The method includes: obtaining a laser point cloud frame obtained by scanning the operating environment (S202); filtering data points in the laser point cloud frame according to reflection features corresponding to the data points in the laser point cloud frame, to obtain a filtered laser point cloud frame (S204); clustering the data points in the filtered laser point cloud frame, to obtain a point cloud cluster (S206); if it is determined, on the basis of the point cloud cluster, that the laser point cloud frame includes the marker, performing motion control on the robot (S208).

## Description

### CROSS-REFERENCE OF RELATED APPLICATIONS

This application claims priority to Chinese patent application No. 202310638909.9, filed on May 31, 2023, entitled "ROBOT MOTION CONTROL METHOD AND APPARATUS, ROBOT, AND STORAGE MEDIUM". The contents of which are hereby incorporated herein in its entirety by reference.

### TECHNICAL FIELD

The present application relates to the field of mobile robot technologies, particular to a robot motion control method, an apparatus, a robot, a storage medium, and a computer program product.

### BACKGROUND

With the development of mobile robot technologies, the application environments of mobile robots have become increasingly complex. During movement, robots may enter dangerous or prohibited areas. For example, the robots may be at the risk of falling due to entering the dangerous areas. In conventional technologies, infrared detection can be used to perform motion control on robots. However, due to the short sensing distance of the infrared detection, when the robots move at a fast speed, it canot prevent the robots from falling, or may cause the robots to topple over due to emergency braking. In the method of performing motion control on robots based on magnetic strips, the induction distance of magnetic strips is short and they are prone to demagnetization. The anti-falling method based on depth cameras has low precision and is prone to false detection. Therefore, how to ensure the safe operation of the robots has become a critical technical problem to be addressed.

### SUMMARY

According to various embodiments of the present application, a robot motion control method and an apparatus, a robot, a computer readable storage medium, and a computer program product are provided.

A robot motion control method is provided, the robot is equipped with a lidar, a marker is provided in an operation environment of the robot, and the method includes:
obtaining a laser point cloud frame by scanning the operation environment;
filtering data points in the laser point cloud frame based on reflection features corresponding to respective data points in the laser point cloud frame to obtain a filtered laser point cloud frame;
clustering data points in the filtered laser point cloud frame to obtain point cloud clusters; and
performing a motion control on the robot in response to determining that the laser point cloud frame contains the marker based on the point cloud clusters.

A robot motion control apparatus is provided, including:
an obtaining module, configured to obtain a laser point cloud frame by scanning the operation environment;
a filtering module, configured to filter data points in the laser point cloud frame based on reflection features corresponding to respective data points in the laser point cloud frame to obtain a filtered laser point cloud frame;
a clustering module, configured to cluster data points in the filtered laser point cloud frame to obtain point cloud clusters;
a control module, configured to perform a motion control on the robot in response to determining that the laser point cloud frame contains the marker based on the point cloud clusters.

A robot is provided, including a memory and a processor. The memory stores a computer program, the robot is equipped with a lidar, a marker is provided in the operation environment of the robot, and the processor, when executing the computer program, implements the steps of the robot motion control method.

A computer-readable storage medium is provided, on which a computer program is stored. The computer program, when executed by a processor, implements the steps of the robot motion control method.

A computer program product is provided, including a computer program. The computer program, when executed by a processor, implements the steps of the robot motion control method.

One or more embodiments of the present application will be described in detail below with reference to drawings. Other features and merits of the present application will become apparent from the specification, the accompanying drawings, and the claims.

### BRIEF DESCRIPTION OF THE DRAWINGS

To describe the technical solutions in the embodiments of the present application or the related art more clearly, the accompanying drawings required for describing the embodiments or the related art will be briefly introduced below. Apparently, the accompanying drawings in the following description illustrate merely some embodiments of the present application. For those skilled in the art, other accompanying drawings of the embodiments can also be obtained based on these accompanying drawings without inventive effort.
FIG. 1 is a diagram showing an application environment of a robot motion control method in an embodiment.
FIG. 2 is a schematic flow chart of a robot motion control method in an embodiment.
FIG. 3 is a schematic diagram of a retro-reflective marker in an embodiment.
FIG. 4 is a schematic flow chart of a robot motion control method based on a distance in an embodiment.
FIG. 5A is a schematic diagram of an area determined according to a distance from a marker in an embodiment.
FIG. 5B is a schematic flow chart of filtering a laser point cloud frame in an embodiment.
FIG. 6 is a schematic flow chart of a method for obtaining point cloud clusters by clustering in an embodiment.
FIG. 7 is a schematic flow chart of a robot motion control method in another embodiment.
FIG. 8 is a block diagram showing a configuration of a robot motion control apparatus in an embodiment.
FIG. 9 is a diagram showing an internal configuration of a robot in an embodiment.

### DETAILED DESCRIPTION OF THE EMBODIMENTS

For a better understanding of the present application, a more comprehensive description of the present application will be provided below with reference to the relevant accompanying drawings. Preferred embodiments of the present application are shown in the accompanying drawings. However, the technical solution in the present application can be implemented in many different forms and is not limited to the embodiments described herein. On the contrary, these embodiments are provided for the purpose of making the understanding of the present application more thorough and comprehensive.

Unless otherwise defined, all technical and scientific terms used herein have the same meanings as commonly understood by those skilled in the art to which the invention belongs. The terms used herein in the specification of the present application are only for the purpose of describing the specific embodiments of the present application and are not intended to limit the present application. The term "and/or" as used herein includes any and all combinations of one or more of the associated listed items.

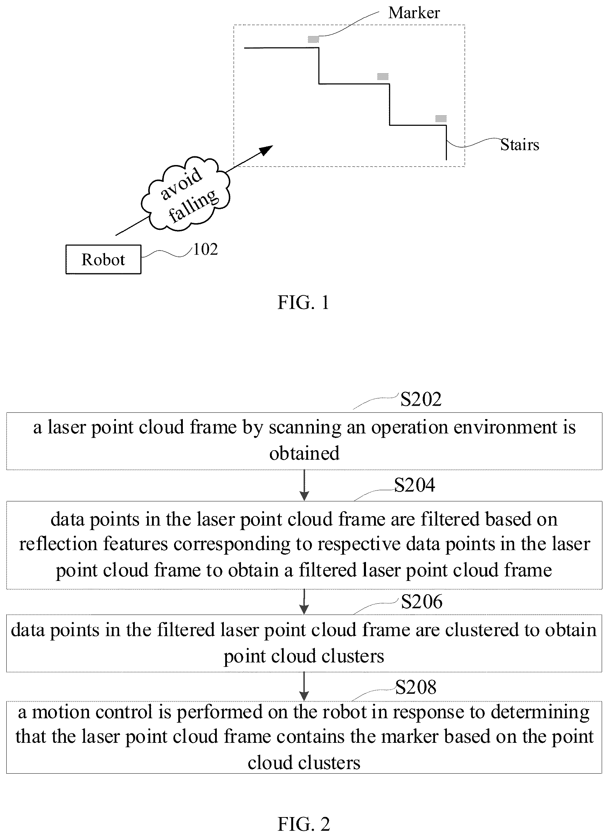

The robot motion control method according to embodiments of the present application can be applied to an application environment as shown in FIG. 1. The robot 102 obtains a laser point cloud frame by scanning the operation environment; filters data points in the laser point cloud frame based on reflection features corresponding to respective data points in the laser point cloud frame to obtain a filtered laser point cloud frame; clusters data points in the filtered laser point cloud frame to obtain point cloud clusters; and performs a motion control on the robot 102 if it is determined that the laser point cloud frame contains a marker based on the point cloud clusters. The robot 102 may be, but is not limited to, various delivery robots, operation robots, service robots, sorting robots, or cleaning robots, etc. Users set markers at the edges of dangerous areas or prohibited areas in the operation environment of the robot 102, and the marker has at least one of a recognizable structural feature, a material feature, or a pattern feature. For example, the user can affix markers to both sides of stairs, such as retro-reflective markers or structural markers. The retro-reflective marker has a specific shape and a high reflectivity to laser pulses. The structural marker has a specific structure, and presents the specific structural feature in the laser point cloud frame formed after the laser pulse is reflected. The robot 102 is equipped with a lidar. The operation environment is scanned by the lidar to obtain laser point cloud frames, and then a reflection intensity or a structural feature is selected as the reflection feature to detect whether there is a marker in the operation environment, and thus a motion control can be performed on the robot.

In an embodiment, as shown in FIG. 2, a robot motion control method is provided, which is described by taking this method applied to the robot in FIG. 1 as an example, including the following steps.

In the step S202, a laser point cloud frame by scanning an operation environment is obtained.

The operation environment refers to an environment where the robot operates, which may be an indoor environment or an outdoor environment. For example, the operation environment may be a road environment for delivering goods, a hotel environment for providing services, or a working environment in a factory.

A marker is provided in the operation environment. The marker includes a reflective marker and a structural marker. The reflective marker has a high reflection intensity for a laser pulse. According to the reflection intensities respectively corresponding to the data points, data points with high reflection intensities can be retained as filtered data points, so as to identify the reflective marker from the filtered data points. The structural marker has a specific structure, and presents the specific structural feature in the laser point cloud frame formed after the laser pulse is reflected. Therefore, the data points can be filtered according to the structural features respectively corresponding to the data points to identify the structural marker from the filtered data points.

The robot is equipped with a lidar. The laser point cloud frame can thus be obtained through lidar scanning. The laser point cloud frame consists of multiple data points. Each of the data points corresponds to a laser intensity. The lidar is an optical sensor, can emit laser pulses to the operation environment, receive the laser pulses reflected by various objects in the operation environment, and generate laser point cloud frames based on the reflected laser pulses.

In the step S204, data points in the laser point cloud frame are filtered based on reflection features corresponding to respective data points in the laser point cloud frame to obtain a filtered laser point cloud frame.

The data points are the points in the laser point cloud frame. The data points represent the points in the three-dimensional space scanned by the lidar. Each of the data points includes multiple attributes such as position coordinates, a reflection feature, or a scanning angle. The reflection feature includes a reflection intensity or a reflected structural feature. The reflection intensity represents a pulse echo intensity of the lidar. The higher the reflectivity of a point in the three-dimensional space to the laser pulse is, the higher the reflection intensity of the data point corresponding to the point in the three-dimensional space. The structural feature represents structuralized information presented in a pulse echo of the lidar.

In an embodiment, if the reflection feature represents the reflection intensity, the step S204 specifically includes: determining an intensity threshold based on the reflection intensities corresponding to the data points in the laser point cloud frame; and retaining data points with the reflection intensities greater than the intensity threshold among the data points in the laser point cloud frame to obtain the filtered laser point cloud frame.

In the step S206, data points in the filtered laser point cloud frame are clustered to obtain point cloud clusters.

The point cloud cluster is a cluster consisting of the data points belonging to the same category. For example, the point cloud cluster may be a cluster consisting of the data points corresponding to the same object scanned by the lidar. Clustering is an unsupervised learning technique that measures the similarity of objects to be clustered and groups similar objects into one category.

In an embodiment, the robot can cluster the data points in the filtered laser point cloud frame through a K-Means clustering algorithm, a Balanced Iterative Reducing and Clustering using Hierarchies (BIRCH) algorithm, or a Gaussian Mixture Clustering algorithm, so as to obtain the point cloud clusters.

In the step S208, a motion control is performed on the robot in response to determining that the laser point cloud frame contains the marker based on the point cloud clusters.

In an embodiment, if the reflection feature represents the reflection intensity, the robot can determine whether the laser point cloud frame contains the reflective marker based on the point cloud clusters. The motion control is performed on the robot in responsed to determining that the laser point cloud frame contains the reflective marker based on the point cloud clusters.

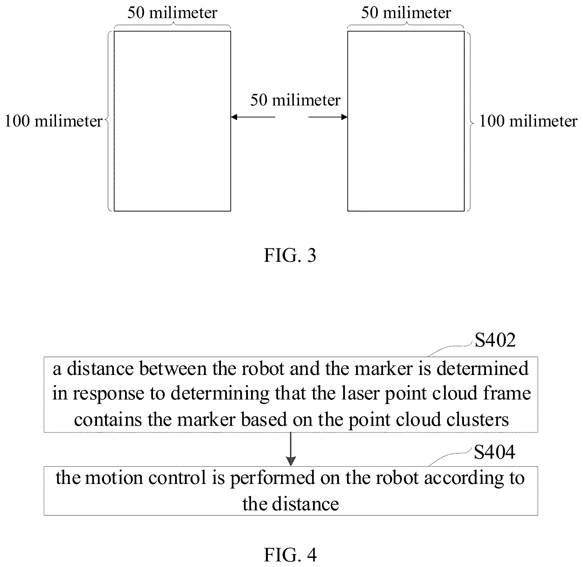

The reflective marker is made of reflective materials, affixed to the edges of dangerous areas or prohibited areas, and may be composed of graphic elements in various shapes. For example, the reflective marker may be composed of one or more rectangles, circles, ellipses, or triangles, etc. The multiple graphic elements composing the reflective marker may be the same or different. For example, the reflective marker may be composed of two or more rectangles, or a rectangle and a circle, or a circle and a triangle. In an embodiment, as shown in FIG. 3, the reflective marker is composed of two rectangles placed side by side. The size of the rectangles and the distance between the rectangles can be adjusted according to actual requirements. For example, the size of each of the rectangles may be 50 mm × 100 mm, and the distance between the two rectangles may be 50 mm.

The motion control refers to controlling the motion mode of the robot, including controlling a moving speed, a moving direction, or a moving path of the robot. For example, the robot is controlled to stop moving, or to bypass a dangerous area, or to reduce the moving speed. In response to determining that the laser point cloud frame contains the reflective marker based on the point cloud clusters, it indicates that the robot is about to move into the dangerous area or the prohibited area, and the motion control needs to be performed on the robot. For example, the user can affix reflective markers to both sides of stairs or elevators. When the laser point cloud frame collected by the robot through the lidar contains the reflective marker, it indicates that the robot is about to move near the stairs or elevators, posing a risk of falling. Therefore, the motion control needs to be performed on the robot. In another example, the user can affix reflective markers to the edges of prohibited areas such as water areas. When the laser point cloud frame collected by the robot through the lidar contains the reflective marker, it indicates that the robot is about to move into the prohibited area. Therefore, the motion control needs to be performed on the robot. In yet another example, the user can also affix reflective markers to the edges of fragile obstacles, such as glass. When the laser point cloud frame collected by the robot through the lidar contains the reflective marker, it indicates that the robot may collide with the fragile obstacles. Therefore, the motion control needs to be performed on the robot.

In another embodiment, if the reflection feature represents the structural feature, the robot can determine whether the laser point cloud frame contains the structural marker based on the point cloud clusters. In response to determining that the laser point cloud frame contains the structural marker based on the point cloud clusters, the motion control needs to be performed on the robot.

In the above embodiments, the laser point cloud frame can be obtained by scanning the operation environment. Since the reflection features of markers to laser are different from those of other objects in the operation environment, the data points in the laser point cloud frame are filtered according to the reflection features corresponding to the respective data points in the laser point cloud frame. In this way, the data points with reflection features different from other objects can be selected to obtain the filtered laser point cloud frame. The data points in the filtered laser point cloud frame can be clustered to obtain the point cloud clusters, so that it can be determined whether the laser point cloud frame contains the marker according to the shape feature of the marker. In response to determining that the laser point cloud frame contains the marker based on the point cloud clusters, the motion control is performed on the robot. By identifying the markers in the laser point cloud frame using the different reflection features of the markers to laser and the shape features of the markers, the recognition accuracy can be higher, effectively preventing the robot from entering the dangerous areas and prohibited areas. In addition, since the laser has a long sensing distance, the marker can be identified at a relatively long distance, which gives the robot sufficient time to brake, effectively preventing the fast-moving robot from falling or tipping over due to emergency braking, thereby ensuring the safe operation of the robot.

In an embodiment, as shown in FIG. 4, the step S208 specifically includes the following steps.

In the step S402, a distance between the robot and the marker is determined in response to determining that the laser point cloud frame contains the marker based on the point cloud clusters.

The distance refers to a distance between the robot and the marker in the three-dimensional space. The robot can obtain a time interval from the emission of a laser pulse by the lidar to the reception of the reflected echo. The distance between the robot and the marker can be determined according to the time interval.

In the step S404, the motion control is performed on the robot according to the distance.

Since the marker is affixed to the edge of the dangerous area, the urgency of danger is low when the robot is far from the marker, and higher when the robot is close to the marker. Therefore, the motion control is performed on the robot according to the distance between the robot and the marker.

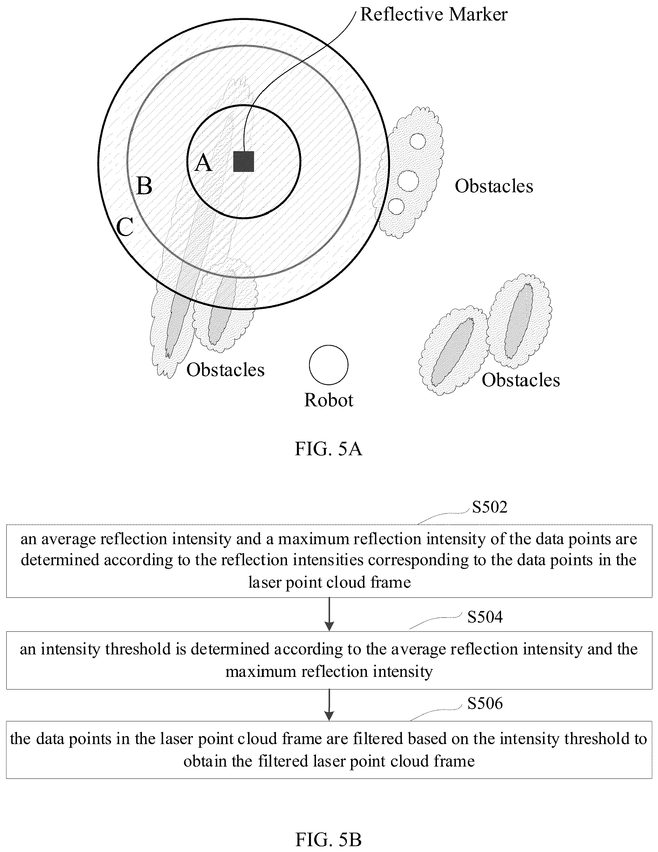

In an embodiment, the step S404 specifically includes determining a current area where the robot is located according to the distance, and performing the motion control on the robot according to the current area. Specifically, as shown in FIG. 5A, the black rectangle is a reflective marker, the area A is a braking area, the area B is an avoidance area, and the area C is a deceleration area. When the robot moves to the deceleration area, the robot is controlled to reduce the moving speed. For example, the moving speed of the robot is reduced to 0.6 m/s. When the robot is in the avoidance area, the robot is controlled to stop moving when encountering an obstacle. When the robot is in the braking area, the robot is controlled to stop moving. The deceleration area is the farthest from the reflective marker, the avoidance area is between the braking area and the deceleration area, and the braking area is the closest to the reflective marker. The distances from respective areas to the reflective marker can be adjusted. For example, the braking area may be an area with a distance less than 1.2 m from the reflective marker, the avoidance area may be an area with a distance greater than or equal to 1.2 m and less than 1.5 m from the reflective marker, and the deceleration area may be an area with a distance greater than or equal to 1.5 m and less than 2 m from the reflective marker.

In an embodiment, the step S404 specifically includes controlling a moving path of the robot according to the distance. For example, when the distance is less than a preset value, the robot is controlled to stop moving and return. Alternatively, when the distance is less than the preset value, the robot is controlled to adjust the moving direction.

In the above embodiments, in response to determining that the laser point cloud frame contains the marker based on the point cloud clusters, the distance between the robot and the marker is determined, and the motion control is performed on the robot according to the distance. Thus, the motion mode of the robot can be adjusted according to the distance, thereby improving the flexibility of the robot's motion.

In an embodiment, the step S208 specifically includes determining position coordinates corresponding to respective markers in response to determining that the at least two laser point cloud frames contain the markers based on the point cloud clusters; and performing the motion control on the robot in response to the position coordinates corresponding to the markers in the at least two laser point cloud frames being the same.

The position coordinates refer to the coordinates of the markers in the world coordinate system. Each of the data points in the laser point cloud frame includes the position coordinates corresponding to the data point. The robot can determine the position coordinates of the markers according to the position coordinates corresponding to the data points. To avoid false detection by the robot, when the robot identifies the marker in a certain laser point cloud frame, it continues to obtain laser point cloud frames through the lidar. In response to the position coordinates corresponding to the markers in multiple laser point cloud frames continuously collected by the lidar being the same, it indicates that these markers all correspond to the same marker. Then, it is determined that the robot has scanned the marker, and motion control is performed on the robot.

In the above embodiments, in response to determining that the at least two laser point cloud frames contain the markers based on the point cloud clusters, the position coordinates of the markers are determined. In response to the position coordinates of the markers in the at least two laser point cloud frames being the same, the motion control is performed on the robot, thereby effectively avoiding the false detection by the robot and improving the accuracy of the motion control on the robot.

In an embodiment, the marker includes a reflective marker, and the reflection features include reflection intensities. As shown in FIG. 5B, the step S204 specifically includes the following steps.

In the step S502, an average reflection intensity and a maximum reflection intensity of the data points are determined according to the reflection intensities corresponding to the data points in the laser point cloud frame.

The average reflection intensity is an average value of the reflection intensities corresponding to the data points in the laser point cloud frame. The maximum reflection intensity is a maximum value of the reflection intensities corresponding to the data points in the laser point cloud frame. When receiving the laser point cloud frame, the robot counts the reflection intensities corresponding to the data points in the laser point cloud frame, calculates the average reflection intensity, and determines the maximum reflection intensity among the reflection intensities corresponding to the data points. The robot can determine the maximum reflection intensity through various search methods such as a sequential search method, a binary search method, or a binary tree search method.

In the step S504, an intensity threshold is determined according to the average reflection intensity and the maximum reflection intensity.

If the marker is the reflective marker, since the reflective marker has a high reflectivity to the laser pulse, the reflection intensities of the respective data points corresponding to the reflective marker in the laser point cloud frame are relatively high. Therefore, the robot can determine the intensity threshold according to the average reflection intensity and the maximum reflection intensity, and then filter the data points in the laser point cloud frame according to the intensity threshold.

In an embodiment, the step S504 specifically includes performing weighted summation on the average reflection intensity and the maximum reflection intensity, and taking the obtained sum value as the intensity threshold. The weight values corresponding to the average reflection intensity and the maximum reflection intensity can be the same or different. For example, the weight value corresponding to the average reflection intensity is 0.3, and the weight value corresponding to the maximum reflection intensity is 0.7. Developers can configure the weight values corresponding to the average reflection intensity and the maximum reflection intensity during the robot's factory setup, or users can configure them in a setting interface.

In an embodiment, the step S504 specifically includes: determining an average value of the average reflection intensity and the maximum reflection intensity by the robot, and taking the average value as the intensity threshold.

In the step S506, the data points in the laser point cloud frame are filtered based on the intensity threshold to obtain the filtered laser point cloud frame.

The robot filters the data points in the laser point cloud frame based on the intensity threshold, filters out the data points with the reflection intensities lower than the intensity threshold, and retains the data points with the reflection intensity higher than the intensity threshold.

In the above embodiments, the average reflection intensity and the maximum reflection intensity of the data points are determined according to the reflection intensities corresponding to the respective data points in the laser point cloud frame. The intensity threshold is determined according to the average reflection intensity and the maximum reflection intensity. The data points in the laser point cloud frame are filtered based on the intensity threshold to obtain the filtered laser point cloud frame. Thus, the data points that meet the reflection feature of the reflective marker can be selected from the laser point cloud frame, and the dangerous areas can be identified using the feature that the reflective marker has the high reflection intensity to the laser pulse, thereby improving the accuracy of the motion control on the robot.

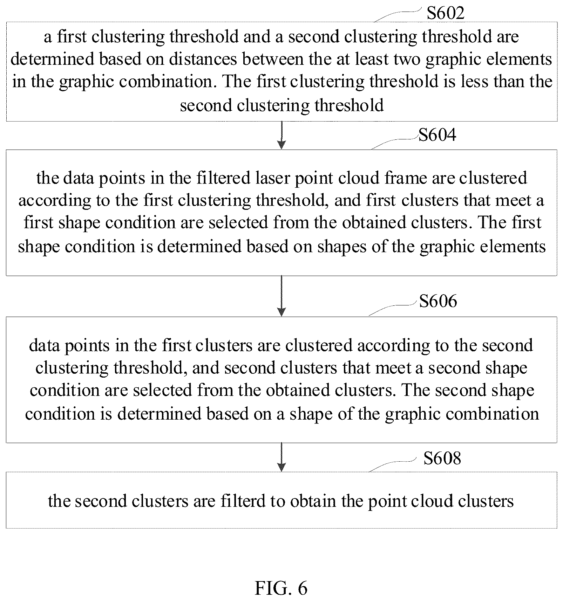

In an embodiment, the marker is a graphic combination composed of at least two graphic elements. As shown in FIG. 6, the step S206 specifically includes the following steps.

In the step S602, a first clustering threshold and a second clustering threshold are determined based on distances between the at least two graphic elements in the graphic combination. The first clustering threshold is less than the second clustering threshold.

The graphic elements can be of various shapes, including rectangles, circles, or triangles, etc. The robot can identify the graphic combination in the laser point cloud frame according to the shape features of the graphic combination. In an embodiment, the first clustering threshold determined by the robot is less than the distances between the graphic elements, and the second clustering threshold is greater than the distances between the graphic elements, so that the data points corresponding to the graphic elements can be clustered into clusters through the first clustering threshold, and the data points corresponding to the graphic combination can be clustered into clusters through the second clustering threshold. In an embodiment, assuming the distance between the graphic elements is R, the robot can determine the first clustering threshold to be 0.5R, and the second clustering threshold to be 1.5R.

In the step S604, the data points in the filtered laser point cloud frame are clustered according to the first clustering threshold, and first clusters that meet a first shape condition are selected from the obtained clusters. The first shape condition is determined based on shapes of the graphic elements.

The first shape condition is a selection condition determined based on the shapes of the graphic elements, which is used to select clusters that meet the shape features of the graphic elements. In an embodiment, the first shape condition may be that the aspect ratio of the minimum bounding rectangle of the cluster is within a preset range. The preset range corresponding to the aspect ratio can be determined according to the aspect ratio of the graphic element. For example, if the graphic element is a rectangle with an aspect ratio of 2, the preset range may be a numerical interval from 1.8 to 2.2. In another embodiment, the first shape condition may be that the radius of the minimum bounding circle of the cluster is within a preset range. The preset range corresponding to the radius can be determined according to the radius of the graphic element. For example, if the graphic element is a circle with a radius of 3, the preset range may be a numerical interval from 2.5 to 3.5. The robot clusters the data points in the filtered laser point cloud frame according to the first clustering threshold, and clusters the data points whose distance is less than the first clustering threshold into a cluster. Then, the obtained clusters are selected according to the first shape condition, and the clusters that are too large, too small, or not similarly shaped compared to the graphic elements are removed. The obtained first clusters can meet the geometric feature of the same graphic element.

In the step S606, data points in the first clusters are clustered according to the second clustering threshold, and second clusters that meet a second shape condition are selected from the obtained clusters. The second shape condition is determined based on a shape of the graphic combination.

The second shape condition is a selection condition determined based on the shape of the graphic combination, which is used to select the clusters that meet the shape feature of the graphic combination. In an embodiment, the second shape condition may be that the aspect ratio of the minimum bounding rectangle of the cluster is within a preset range. The preset range of the aspect ratio can be determined according to the overall aspect ratio of the graphic combination. For example, if the aspect ratio of the graphic combination is 1.5, the preset range may be a numerical interval from 1 to 2. In another embodiment, the second shape condition may be that the radius of the minimum bounding circle of the cluster is within a preset range. The preset range of the radius can be determined according to the overall radius of the graphic combination.

The robot clusters the data points in the first clusters according to the second clustering threshold, and clusters the data points whose distance is less than the second clustering threshold into a cluster. Then, the obtained clusters are selected according to the second shape condition, and the clusters that are too large, too small, or not similarly shaped compared to the graphic combination are removed, so as to obtain the second clusters that meet the overall geometric feature of the graphic combination.

In the step S608, the second clusters are filterd to obtain the point cloud clusters.

In order to ensure that the number of the clusters contained in the finally obtained point cloud clusters is the same asthe number of the graphic elements contained in the graphic combination, the robot filters the second clusters to obtain the point cloud clusters.

In an embodiment, the step S608 specifically includes: clustering each of the second clusters into a plurality of sub-clusters according to the first clustering threshold, and determining a number of the sub-clusters in each of the second clusters; filtering the second clusters based on the number of sub-clusters in each of the second clusters to obtain the point cloud clusters.

The robot clusters each of the second clusters into th plurality of sub-clusters according to the first clustering threshold, and the shape and size of the sub-clusters are similar to those of the graphic elements. The robot determines the number of the sub-clusters in each of the second clusters, compares the number of the sub-clusters in each of the second clusters with the number of the graphic elements in the graphic combination, removes second clusters with too many or too few sub-clusters, and takes the retained second clusters as the point cloud clusters. For example, if the graphic combination includes two graphic elements, the second clusters with the number of the sub-clusters less than 2 or greater than 3 are removed, so that the retained point cloud clusters contain 2 to 3 sub-clusters. The robot filters the second clusters according to the number of the sub-clusters in the second clusters, so that the filtered point cloud clusters not only meet the geometric feature of the graphic combination, but also the number of the sub-clusters contained in the second clusters is the same as the number of the graphic elements in the graphic combination, thereby achieving more accurate identification of the markers and avoiding the false detection.

In the above embodiments, the first clustering threshold and the second clustering threshold are determined according to the distances between the respective graphic elements in the graphic combination. Then, the data points in the filtered laser point cloud frame are clustered according to the first clustering threshold, and the first clusters that meet the first shape condition are selected from the obtained clusters. The data points in the first clusters are clustered according to the second clustering threshold, and the second clusters that meet the second shape condition are selected from the obtained clusters. The second clusters are filtered to obtain the point cloud clusters. Thus, the point cloud clusters that meet the geometric feature of the graphic combination can be obtained through clustering, and the markers can be identified according to the shape of the graphic combination, thereby improving the accuracy of marker identification.

In an embodiment, the step S208 specifically includes: selecting at least two target sub-clusters from sub-clusters of each of the point cloud clusters; determining ratios between numbers of data points of the at least two target sub-clusters for each of the point cloud clusters; determining that the laser point cloud frame contains the marker in response to presence of a target ratio meeting a ratio condition among the ratios, and performing the motion control on the robot.

The target sub-clusters are sub-clusters that meet a selection condition among all sub-clusters. For example, the selection condition may be that the number of the data points is greater than a preset value. Alternatively, the selection condition may be that the number of the data points in all sub-clusters ranks within a preset rank. For example, the preset rank may be 2.

The ratio condition is a condition for determining whether a point cloud cluster represents a marker according to the ratio. In an embodiment, the ratio condition may be that the ratio is less than a preset value. For example, the preset value may be 0.5, 0.6, etc. In another embodiment, the ratio condition may be that the ratio is within a preset ratio interval. The robot can determine the preset ratio interval according to the size of each of the graphic elements in the graphic combination. For example, if the graphic combination includes two graphic elements with the same size, and the ratio between the sizes of the two graphic elements is 1, then when the ratios between the numbers of the data points of the target sub-clusters are much greater than 1 or much less than 1, it indicates that the sizes of the target sub-clusters differ greatly, and also indicates that the sizes of the target sub-clusters do not meet the size feature of each of the graphic elements in the graphic combination, and the point cloud cluster is not the point cloud cluster corresponding to the marker. Therefore, the robot can determine the preset ratio interval as [0.5, 1.5]. If there is a target ratio that meets the ratio condition among the ratios, it indicates that the target sub-clusters in the point cloud cluster meet the size feature of each of the graphic elements in the graphic combination, thereby determining that the point cloud cluster represents a marker.

In the above embodiments, at least two target sub-clusters are selected from the sub-clusters of each of the point cloud clusters. The ratios between the numbers of the data points of the target sub-clusters are determined for each of the point cloud clusters. It is determined that the laser point cloud frame contains the marker in response to the presence of the target ratio meeting the ratio condition among the ratios, and the motion control is performed on the robot. It is determined whether the point cloud cluster is the marker according to whether the sizes of the target sub-clusters in the point cloud cluster meet the size feature of each of the graphic elements in the graphic combination, thereby further improving the accuracy of marker identification.

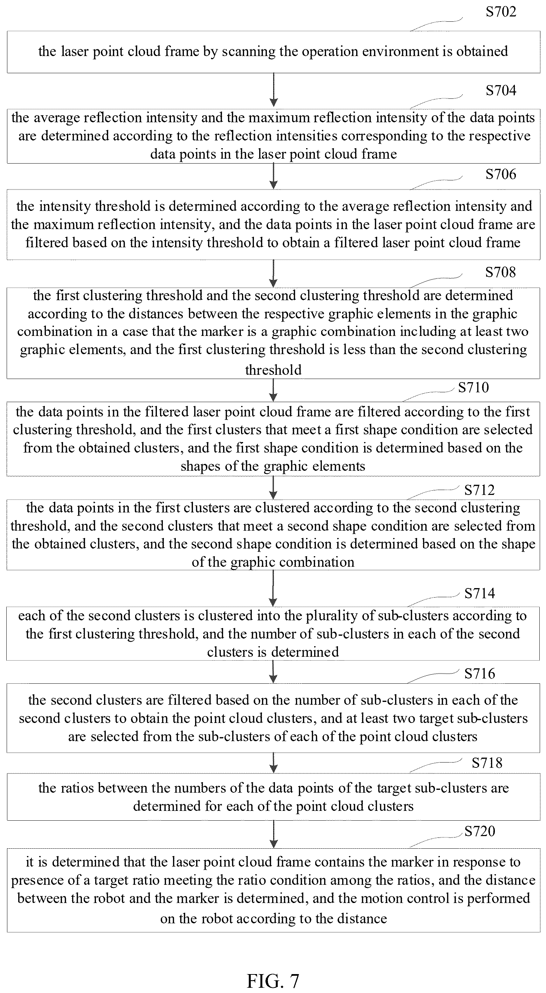

In an embodiment, as shown in FIG. 7, the robot motion control method includes the following steps.

In the step S702, the laser point cloud frame by scanning the operation environment is obtained.

Each of the data points in the laser point cloud frame corresponds to a reflection feature, and the reflection feature may be a reflection intensity or a structural feature. If the reflection feature is the reflection intensity, the step S704 is performed.

In the step S704, the average reflection intensity and the maximum reflection intensity of the data points are determined according to the reflection intensities corresponding to the respective data points in the laser point cloud frame.

In the step S706, the intensity threshold is determined according to the average reflection intensity and the maximum reflection intensity, and the data points in the laser point cloud frame are filtered based on the intensity threshold to obtain a filtered laser point cloud frame.

In the step S708, the first clustering threshold and the second clustering threshold are determined according to the distances between the respective graphic elements in the graphic combination in a case that the marker is a graphic combination including at least two graphic elements. The first clustering threshold is less than the second clustering threshold.

In the step S710, the data points in the filtered laser point cloud frame are filtered according to the first clustering threshold, and the first clusters that meet a first shape condition are selected from the obtained clusters. The first shape condition is determined based on the shapes of the graphic elements.

In the step S712, the data points in the first clusters are clustered according to the second clustering threshold, and the second clusters that meet a second shape condition are selected from the obtained clusters. The second shape condition is determined based on the shape of the graphic combination.

In the step S714, each of the second clusters is clustered into the plurality of sub-clusters according to the first clustering threshold, and the number of sub-clusters in each of the second clusters is determined.

In the step S716, the second clusters are filtered based on the number of sub-clusters in each of the second clusters to obtain the point cloud clusters, and at least two target sub-clusters are selected from the sub-clusters of each of the point cloud clusters.

In the step S718, the ratios between the numbers of the data points of the target sub-clusters are determined for each of the point cloud clusters.

In the step S720, it is determined that the laser point cloud frame contains the marker in response to presence of a target ratio meeting the ratio condition among the ratios, and the distance between the robot and the marker is determined; and the motion control is performed on the robot according to the distance.

The specific description of steps S702 to S720 above can refer to the specific implementations described above.

It should be understood that although the steps in the flowcharts involved in the above embodiments are shown in sequence as indicated by arrows, these steps are not necessarily performed sequentially in the order indicated by the arrows. Unless explicitly stated herein, the execution of these steps is not strictly limited in any order, and these steps can be performed in any other order. Moreover, at least some of the steps in the flowcharts involved in the above embodiments may include multiple steps or multiple stages. These steps or stages are not necessarily performed simultaneously, but can be performed at different moments. The order in which these steps or stages are performed is not necessarily sequential, but these steps or stages can be performed in turn or alternately with at least some of other steps or at least some of steps or stages in other steps.

Based on the same inventive concept, a robot motion control apparatus for implementing the robot motion control method involved above is also provided in an embodiment of the present application. The solution to the problem provided by the apparatus is similar to the implementations described in the above method. Therefore, the specific features in one or more embodiments for the robot motion control apparatus provided below may be understood with reference to the features of the robot motion control method above, and will not be repeated here.

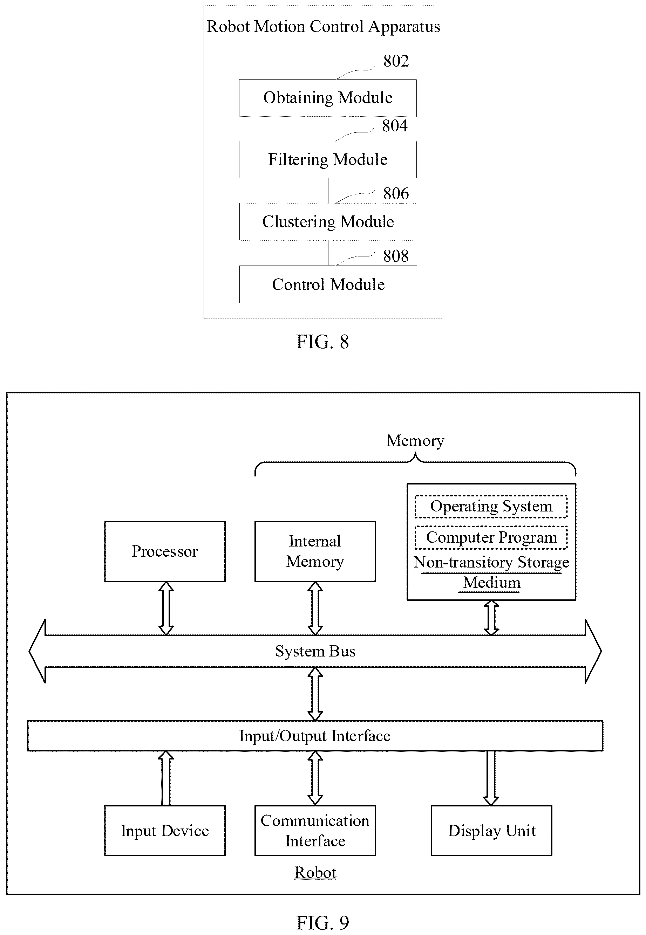

In an embodiment, as shown in FIG. 8, a robot motion control apparatus is provided, including an obtaining module 802, a filtering module 804, a clustering module 806, and a control module 808.

The obtaining module 802 is configured to obtain a laser point cloud frame by scanning the operation environment.

The filtering module 804 is configured to filter data points in the laser point cloud frame based on reflection features corresponding to respective data points in the laser point cloud frame to obtain a filtered laser point cloud frame.

The clustering module 806 is configured to cluster data points in the filtered laser point cloud frame to obtain point cloud clusters.

The control module 808 is configured to perform a motion control on the robot in response to determining that the laser point cloud frame contains the marker based on the point cloud clusters.

In the above embodiment, a laser point cloud frame can be obtained by scanning the operation environment. Since the reflection features of markers to laser are different from those of other objects in the operation environment, the data points in the laser point cloud frame are filtered according to the reflection features corresponding to the respective data points in the laser point cloud frame, so that the data points with reflection features different from those of other objects can be filtered to obtain a filtered laser point cloud frame. The data points in the filtered laser point cloud frame can be clustered to obtain the point cloud clusters, so that whether the laser point cloud frame contains the marker can be determined according to the shape feature of the marker. In response to determining that the laser point cloud frame contains the marker based on the point cloud clusters, the motion control is performed on the robot. By identifying the marker in the laser point cloud frame using the different reflection features of laser and the shape feature of the marker, the recognition accuracy can be relatively high, effectively preventing the robot from entering the dangerous areas and prohibited areas. In addition, since the laser has a long sensing distance, the marker can be identified at a relatively long distance, enabling the robot has sufficient time to brake, effectively preventing fast-moving robots from falling or tipping over due to emergency braking, thereby ensuring the safe operation of the robot.

In an embodiment, the control module 808 is further configured to determine the distance between the robot and the corresponding marker in response to determining that the laser point cloud frame contains the marker based on the point cloud clusters; and perform the motion control on the robot according to the distance.

In an embodiment, the laser point cloud frame includes at least two frames; the control module 808 is further configured to respectively determine the position coordinates corresponding to respective markers in response to determining that the laser point cloud frame contains the markers based on the point cloud clusters; and perform the motion control on the robot in response to that the position coordinates corresponding to the markers in at least two laser point cloud frames are the same.

In an embodiment, the filtering module 804 is further configured to determine the average reflection intensity and maximum reflection intensity of the data points according to the reflection intensities corresponding to the respective data points in the laser point cloud frame; determine an intensity threshold according to the average reflection intensity and the maximum reflection intensity; and filter the data points in the laser point cloud frame based on the intensity threshold to obtain a filtered laser point cloud frame.

In an embodiment, the marker is a graphic combination including at least two graphic elements. The clustering module 806 is further configured to determine a first clustering threshold and a second clustering threshold according to the distances between the respective graphic elements in the graphic combination, where the first clustering threshold is less than the second clustering threshold; cluster the data points in the filtered laser point cloud frame according to the first clustering threshold, and screen the first clusters that meet a first shape condition from the clusters obtained by clustering, where the first shape condition is determined based on the shape of the graphic elements; cluster the data points in the first clusters according to the second clustering threshold, and screen the second clusters that meet a second shape condition from the clusters obtained by clustering, where the second shape condition is determined based on the shape of the graphic combination; and filter the second clusters to obtain the point cloud clusters.

In an embodiment, the clustering module 806 is further configured to cluster each of the second clusters into multiple sub-clusters according to the first clustering threshold, and determine the number of the sub-clusters in each of the second clusters; filter the second clusters based on the number of the sub-clusters to obtain the point cloud clusters.

In an embodiment, the control module 808 is further configured to select at least two target sub-clusters from the sub-clusters of each of the point cloud clusters; determine the ratios between the numbers of the data points of the target sub-clusters for each of the point cloud clusters; determine that the laser point cloud frame contains the marker in a case where exists a target ratio that meets the ratio condition among the ratios, and perform the motion control on the robot.

Each module in the above robot motion control apparatus can be implemented in whole or in part by software, hardware, or a combination thereof. The above modules can be embedded in or independent of a processor in a computer device in the form of hardware, or stored in a memory in the computer device in the form of software, so as to be called by the processor to perform the operations corresponding to the above modules.

In an embodiment, a robot is provided. A diagram showing an internal configuration of the robot may be shown in FIG. 9. The robot includes a processor, a memory, an input/output interface, a communication interface, a display unit, and an input device. The processor, memory, and input/output interface are connected through a system bus, and the communication interface, display unit, and input device are connected to the system bus through the input/output interface. The processor of the robot is configured to provide computing and control capabilities. The memory of the robot includes a non-transitory storage medium and an internal memory. The non-transitory storage medium stores an operating system and a computer program. The internal memory provides an environment for the operation of the operating system and computer program in the non-transitory storage medium. The input/output interface of the robot is configured to exchange information between the processor and an external device. The communication interface of the robot is configured to communicate with an external terminal in a wired or wireless manner. Wireless communication can be implemented through WIFI, mobile cellular network, Near Field Communication (NFC), or other techniques. The computer program is executed by the processor to implement the robot motion control method. The display unit of the robot is configured to form a visible image, which may be a display screen, a projection device, or a virtual reality imaging device. The display screen may be a liquid crystal display or an electronic ink display. The input device of the robot may be a touch layer covered on the display screen, a button, a trackball, a touchpad provided on the robot shell, an external keyboard, an external touchpad, or an external mouse.

Those skilled in the art can understand that the structure shown in FIG. 9 is only a block diagram of part of the structure related to the solution of the present application, and does not constitute a limitation on the computer device to which the solution of the present application is applied. Specifically, the robot may include more or fewer components than those shown in the figures, or combine some components, or may have a different arrangement of components.

In an embodiment, a robot is provided, including a memory and a processor. A computer program is stored in the memory. The robot is equipped with a lidar. A marker is provided in the operation environment for the robot. When the processor executes the computer program, the steps in the above method embodiments are implemented.

In an embodiment, a computer-readable storage medium is provided, on which a computer program is stored, and when the computer program is executed by a processor, the steps in the above method embodiments are implemented.

In an embodiment, a computer program product is provided, including a computer program, which when executed by a processor implements the steps in the above method embodiments.

It should be noted that the user information (including but not limited to user equipment information, user personal information, etc.) and data (including but not limited to data used for analysis, stored data, displayed data, etc.) involved in the present application are all information and data authorized by the user or fully authorized by all parties. The collection, use, and processing of relevant data are required to comply with the relevant laws, regulations, and standards of relevant countries and regions.

Those of ordinary skill in the art can understand that all or part of the processes in the method of the above embodiments can be completed by instructing relevant hardware through a computer program. The computer program can be stored in a non-transitory computer-readable storage medium. When the computer program is executed, the execution can include the processes of the above method embodiments. Any reference to memories, databases, or other medium in the embodiments provided in the present application may include at least one of a non-transitory memory or a transitory memory. The non-transitory memory may include a read-only memory (ROM), a magnetic tape, a floppy disk, a flash memory, an optical memory, a high-density embedded non-transitory memory, a resistive random-access memory (ReRAM), a magnetoresistive random-access memory (MRAM), a ferroelectric random-access memory (FRAM), a phase change memory (PCM), or a graphene memory, etc. The transitory memory may include a random-access memory (RAM) or an external cache memory, etc. By way of illustration and not limitation, RAM can be in various forms, such as a static random-access memory (SRAM) or a dynamic random-access memory (DRAM). The databases involved in the embodiments provided in the present application may include at least one of a relational database or a non-relational database. The non-relational database may include a distributed database based on blockchains, but is not limited thereto. The processor involved in the embodiments provided in the present application may be a general-purpose processor, a central processing unit, a graphics processor, a digital signal processor, a programmable logic device, a data processing logic device based on quantum computing, etc., but is not limited thereto.

The technical features of the above embodiments can be combined arbitrarily. To make the description concise, not all possible combinations of the technical features in the above embodiments are described. However, as long as there is no contradiction in the combination of these technical features, they should be considered to be within the scope of protection of the present application.

The above embodiments only shows several implementations of the present application, and their descriptions are specific and detailed, but they should not be understood as a limitation on the protection scope of the present application. It should be pointed out that for those ordinary skilled in the art, without departing from the inventive concept of the present application, various variations and improvements can be made, which all fall within the protection scope of the present application. Therefore, the protection scope of the present application should be subject to the appended claims.

## Claims

1. A robot motion control method, the robot being equipped with a lidar, a marker being provided in an operation environment of the robot, and the method comprising:
obtaining a laser point cloud frame by scanning the operation environment;
filtering data points in the laser point cloud frame based on reflection features corresponding to respective data points in the laser point cloud frame to obtain a filtered laser point cloud frame;
clustering data points in the filtered laser point cloud frame to obtain point cloud clusters; and
performing a motion control on the robot in response to determining that the laser point cloud frame contains the marker based on the point cloud clusters.

2. The method according to claim 1, wherein performing the motion control on the robot in response to determining that the laser point cloud frame contains the marker based on the point cloud clusters comprises:
determining a distance between the robot and the marker in response to determining that the laser point cloud frame contains the marker based on the point cloud clusters; and
performing the motion control on the robot according to the distance.

3. The method according to claim 1, wherein the laser point cloud frame comprises at least two frames, and performing the motion control on the robot in response to determining that the laser point cloud frame contains the marker based on the point cloud clusters comprises:
determining position coordinates corresponding to respective markers in response to determining that the at least two laser point cloud frames contain the markers based on the point cloud clusters; and
performing the motion control on the robot in response to the position coordinates corresponding to the markers in the at least two laser point cloud frames being the same.

4. The method according to claim 1, wherein the marker comprises a reflective marker, the reflection features comprise reflection intensities, and filtering the data points in the laser point cloud frame according to the reflection features corresponding to the respective data points in the laser point cloud frame to obtain the filtered laser point cloud frame comprises:
determining an intensity threshold based on the reflection intensities corresponding to the data points in the laser point cloud frame; and
retaining data points with the reflection intensities greater than the intensity threshold among the data points in the laser point cloud frame to obtain the filtered laser point cloud frame.

5. The method according to claim 4, wherein determining the intensity threshold based on the reflection intensities corresponding to the data points in the laser point cloud frame comprises:
determining an average reflection intensity and a maximum reflection intensity of the data points based on the reflection intensities corresponding to the data points in the laser point cloud frame; and
determining the intensity threshold based on the average reflection intensity and the maximum reflection intensity.

6. The method according to claim 1, wherein the marker is a graphic combination comprising at least two graphic elements, and clustering the data points in the filtered laser point cloud frame to obtain the point cloud clusters comprises:
determining a first clustering threshold and a second clustering threshold based on distances between the at least two graphic elements in the graphic combination, wherein the first clustering threshold is less than the second clustering threshold;
clustering the data points in the filtered laser point cloud frame according to the first clustering threshold, and selecting first clusters that meet a first shape condition from the obtained clusters, wherein the first shape condition is determined based on shapes of the graphic elements;
clustering data points in the first clusters according to the second clustering threshold, and selecting second clusters that meet a second shape condition from the obtained clusters, wherein the second shape condition is determined based on a shape of the graphic combination; and
filtering the second clusters to obtain the point cloud clusters.

7. The method according to claim 6, wherein filtering the second clusters to obtain the point cloud clusters comprises:
clustering each of the second clusters into a plurality of sub-clusters according to the first clustering threshold, and determining a number of the sub-clusters in each of the second clusters; and
filtering the second clusters based on the number of the sub-clusters in each of the second clusters to obtain the point cloud clusters.

8. The method according to any one of claims 1 to 7, wherein performing the motion control on the robot in response to determining that the laser point cloud frame contains the marker based on the point cloud clusters comprises:
selecting at least two target sub-clusters from sub-clusters of each of the point cloud clusters;
determining ratios between numbers of data points of the at least two target sub-clusters for each of the point cloud clusters; and
determining that the laser point cloud frame contains the marker in response to presence of a target ratio meeting a ratio condition among the ratios, and performing the motion control on the robot.

9. The method according to any one of claims 1 to 8, further comprising:
determining whether the laser point cloud frame contains a structural marker based on the point cloud clusters in a case that the reflection feature is a structural feature; and
wherein performing the motion control on the robot in response to determining that the laser point cloud frame contains the marker based on the point cloud clusters comprises:
performing the motion control on the robot in response to determining that the laser point cloud frame contains the structural marker based on the point cloud clusters.

10. The method according to any one of claims 1 to 9, wherein performing the motion control on the robot comprises:
controlling the robot to stop moving;
controlling the robot to bypass a dangerous area; or
controlling the robot to reduce a moving speed.

11. A robot motion control apparatus, comprising:
an obtaining module configured to obtain a laser point cloud frame by scanning the operation environment;
a filtering module configured to filter data points in the laser point cloud frame based on reflection features corresponding to respective data points in the laser point cloud frame to obtain a filtered laser point cloud frame;
a clustering module configured to cluster the data points in the filtered laser point cloud frame to obtain point cloud clusters; and
a control module configured to perform a motion control on the robot in response to determining that the laser point cloud frame contains the marker based on the point cloud clusters.

12. The apparatus according to claim 11, wherein the control module is further configured to:
determine a distance between the robot and the marker in response to determining that the laser point cloud frame contains the marker based on the point cloud clusters; and
perform the motion control on the robot according to the distance.

13. The apparatus according to claim 11, wherein the control module is further configured to:
determine position coordinates corresponding to respective markers in response to determining that the at least two laser point cloud frames contain the markers based on the point cloud clusters; and
perform the motion control on the robot in response to the position coordinates corresponding to the markers in the at least two laser point cloud frames being the same.

14. The apparatus according to claim 11, wherein the markers comprise reflective markers, and the reflection features comprise reflection intensities;
the filtering module is further configured to:
determine an intensity threshold based on the reflection intensities corresponding to the data points in the laser point cloud frame; and
retain data points with the reflection intensities greater than the intensity threshold among the data points in the laser point cloud frame to obtain the filtered laser point cloud frame.

15. The apparatus according to claim 14, wherein the determining the intensity threshold according to the reflection intensities corresponding to the respective data points in the laser point cloud frame comprises:
determining an average reflection intensity and a maximum reflection intensity of the data points based on the reflection intensities corresponding to the data points in the laser point cloud frame; and
determining the intensity threshold based onthe average reflection intensity and the maximum reflection intensity.

16. The apparatus according to claim 11, wherein the marker is a graphic combination comprising at least two graphic elements;
the clustering module is further configured to:
determine a first clustering threshold and a second clustering threshold based on distances between the at least two graphic elements in the graphic combination, wherein the first clustering threshold is less than the second clustering threshold;
cluster the data points in the filtered laser point cloud frame according to the first clustering threshold, and selecting first clusters that meet a first shape condition from the obtained clusters, wherein the first shape condition is determined based on shapes of the graphic elements;
cluster data points in the first clusters according to the second clustering threshold, and selecting second clusters that meet a second shape condition from the obtained clusters, wherein the second shape condition is determined based on a shape of the graphic combination; and
filter the second clusters to obtain the point cloud clusters.

17. The apparatus according to claim 16, wherein the clustering module is further configured to:
cluster each of the second clusters into a plurality of sub-clusters according to the first clustering threshold, and determining a number of the sub-clusters in each of the second clusters; and
filter the second clusters based on the number of the sub-clusters in each of the second clusters to obtain the point cloud clusters.

18. The apparatus according to any one of claims 11 to 17, wherein the control module is further configured to:
select at least two target sub-clusters from sub-clusters of each of the point cloud clusters;
determine ratios between numbers of data points of the at least two target sub-clusters for each of the point cloud clusters; and
determine that the laser point cloud frame contains the marker in response to presence of a target ratio meeting a ratio condition among the ratios, and performing the motion control on the robot.

19. A robot, comprising a memory and a processor, wherein the memory stores a computer program, the robot is equipped with a lidar, a marker is provided in an operation environment of the robot, and the processor, when executing the computer program, implements the steps of the method according to any one of claims 1 to 10.

20. A computer-readable storage medium, having a computer program stored therein, wherein the computer program, when executed by a processor, implements the steps of the method according to any one of claims 1 to 10.
